# EUROPEAN PATENT APPLICATION

(11) **EP 0 870 668 A2**
(43) Date of publication of application: **14.10.1998**
(21) Application number: 98302790.5
(22) Date of filing: 09.04.1998
(51) Int. Cl.: B62B 3/18

(54) **A goods container**

(30) Priority: 11.04.1997 FI 971512
(71) Applicant: Elpi Roll Containers Oy, 04400 Järvenpää (FI)
(72) Inventor: Matoniemi, Markku, 04440 Järvenpää (FI); Ahtiainien, Markku, 04530 Ohkola (FI)
(74) Representative: Burrows, Anthony Gregory

(57) **Abstract**

A roll container includes a base wall 4 tiltable about at least one axle pin 10 from a horizontal, use position into a vertical, latched position in which the wall 4 is latched by latching devices 13. The axle pin(s) 10 constitute(s) parts of respective bearing devices 8 which also include respective slots 9 receiving the axle pins 10 and also receiving springs 12 of elastomeric material acting between the pins 10 and the lower ends 9b of the slots 9. The springs 12 act longitudinally of the slots 9, which are substantially aligned with noses 16 on respective side plates 7 in which the slots 9 are formed. Because of the design of the latching devices 13, whereby the plates 7 ride up ramp surfaces 14a provided by stub bars 14 of the latching devices 13, the base wall 4 can be lowered by simply pulling its upper part in the sense of the arrow G. A further advantage is that the springs 12, by pushing the base wall 4 downwards in its vertical position, help to maintain the base wall 4 latched in that position.

## Description

This invention relates to a goods container, in particular a roll container.

WO-A-95/30566 discloses a roll container of the type comprising a goods-bearing base wall which is tiltably journaled by a substantially horizontal pivot axle between a pair of opposite goods-confining side walls which are mutually turnable away from each other about respective substantially vertical axes between a nesting condition in which the container with tilted-up base wall and diverging side walls can receive an identical container, and a use condition in which the base wall is substantially horizontal and prevents turning of the side walls away from each other. The side walls have respective inwardly extending arms in the form of respective horizontal, profiled, metal plates which extend horizontally through the upper parts of respective rear wheel boxes, by way of horizontal apertures in the outer and inner walls of the wheel boxes. These plates have respective edges disposed rearward of the substantially horizontal axis of turning of the base wall to cooperate with respective rearward extensions of the base wall to control the lowering of the base wall from its tilted-up position resting against the rear wall to its substantially horizontal position, in particular to limit the extent to which the base wall can be turned into its substantially horizontal, use position, unless the side walls are substantially in their respective use conditions in which they are parallel to each other. Projecting inwardly from the respective wheel boxes are arcuate guide strips upon which the respective rearward extensions bear during turning of the base wall between its tilted-up position and its use position. As the base wall approaches its tilted-up position, the extensions are no longer supported by the guide strips, so allowing the now substantially vertical base wall to fall into its tilted-up, nesting position, in which its rearward extensions drop down in front of the forward edges of the strips to latch the base wall in its nesting position, elongate slots in the rearward extensions allowing such dropping of the base wall relative to its pivot axle. To disengage the base wall from its latched condition, the user needs deliberately to lift the base wall and then tilt it forwards to bring the lower ends of the rearward extensions to immediately above the forward zones of the guide strips. This need deliberately to lift the base wall upwards before it can be turned towards its use position leads to difficulties in manipulation of the base wall either manually or automatically. A further problem is that the shorter the distance through which the user has to lift the base wall to unlatch it, which is naturally easier for the user, the more likely the base wall is to jump out of its latched condition when the roll container is being moved.

According to one aspect of the present invention, there is provided a goods container comprising supporting means, a substantially horizontal, goods-bearing wall having a forward part and a rearward part, substantially horizontal, transverse, pivot means pivotally mounting said wall on said supporting means for turning about a substantially horizontal axis, in an edge region of said supporting wall, between a substantially horizontal position and a substantially vertical position, and latching means arranged to latch said wall in said substantially vertical position, the arrangement being such that latching of said wall in said substantially vertical position requires movement of a member of said rearward part from an unlatched, raised condition to a latched, lowered condition and that unlatching of said wall requires movement of said member from said latched, lowered condition to said unlatched, raised condition, characterized in that spring means acts between said wall and said supporting means and, when said wall is in said substantially vertical condition, urges said wall downwardly.

Owing to this aspect of the present invention, it is possible to reduce the risk of the goods-bearing wall jumping out of its tilted-up, latched condition during movement, for example, transport, of the roll container.

If desired, the latching means may include ramp means effective between the wall and the supporting means and inclined rearwardly such that, with the member in the latched, lowered condition, a forward turning moment upon the forward part causes the rearward part to be cammed upwardly by the ramp means to bring the member to the raised, unlatched condition.

According to another aspect of the present invention, there is provided a goods container comprising supporting means, a substantially horizontal, goods-bearing wall having a forward part and a rearward part, substantially horizontal, transverse, pivot means pivotally mounting said wall on said supporting means for turning about a substantially horizontal axis, in an edge region of said supporting wall, between a substantially horizontal position and a substantially vertical position, and latching means arranged to latch said wall in said substantially vertical position, the arrangement being such that latching of said wall in said substantially vertical position requires movement of a member of said rearward part from an unlatched, raised condition to a latched, lowered condition and that unlatching of said wall requires movement of said member from said latched, lowered condition to said unlatched, raised condition, characterized in that said latching means includes ramp means effective between said wall and said supporting means and inclined rearwardly such that, with said member in said latched, lowered condition, a forward turning moment upon said forward part causes said rearward part to be cammed upwardly by said ramp means to bring said member to said raised, unlatched condition.

Owing to this aspect of the invention, it is possible for the user to turn the goods-bearing wall down from its substantially vertical position without having first deliberately to lift the wall. This simplifies use of the goods container.

If desired, spring means may be provided which acts between the wall and the supporting means and, when the wall is in its substantially vertical condition, urges the wall downwardly and thus tends to retain the member in its latched, lowered condition.

In order that the invention may be clearly and completely disclosed, reference will now be made, by way of example, to the accompanying drawings, in which:-
Figure 1 is a top plan view of a roll container shown in full lines in a nesting condition and in chain lines in a use condition,
Figure 2 shows a front elevation of the roll container in its use condition,
Figure 3 shows a front elevation of the roll container in its nesting condition, and
Figure 4 shows a vertical section taken on the line IV-IV of Figure 3.

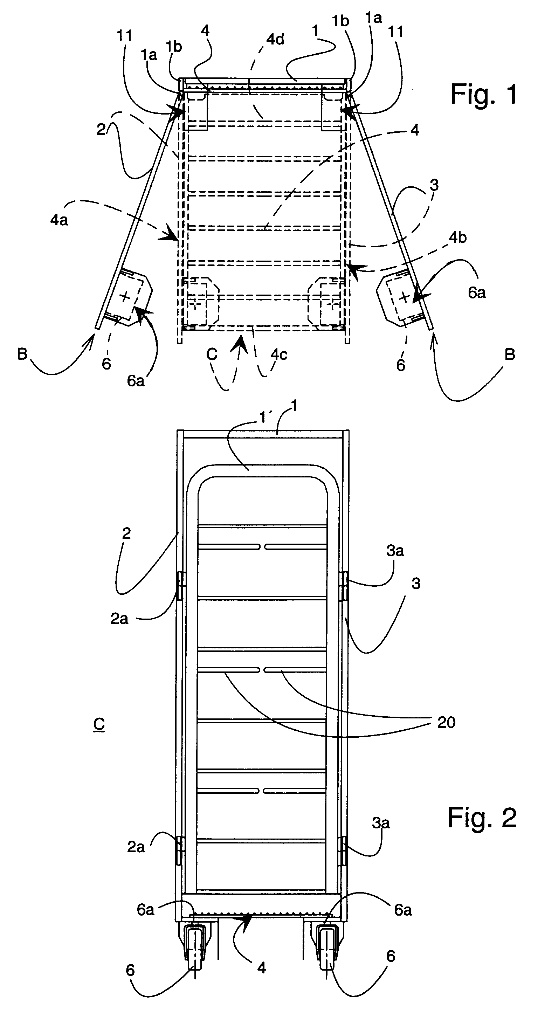

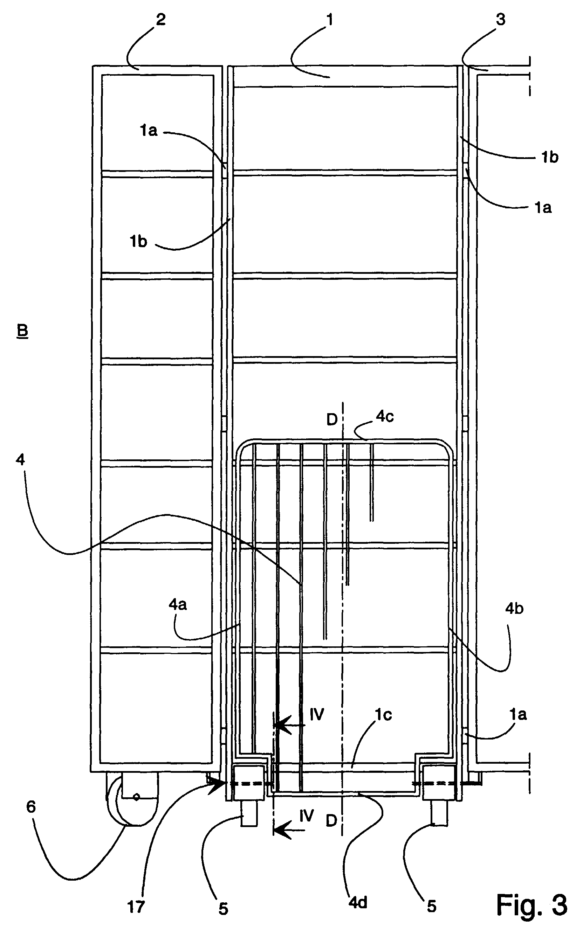

Referring to the drawings, the roll container comprises a rear wall 1, a front door 1', respective opposite, goods-confining, side walls 2 and 3 to the wall 3 of which the door 1' is hinged by hinges 3a and to the wall 2 of which the door 1' is latchable by means of latches 2a, and a goods-bearing base wall 4. The roll container is fitted with shelves 20 which have been omitted from Figures 1 and 3 for the sake of clarity. The rear wall 1 is vertically slidably guided in two vertical columns 1b fixed together at their lower ends by a cross piece 1c. The columns 1b, the cross piece 1c and rear wheel boxes 11 fixed to the cross piece 1c constitute a unit which is used as a main support of the roll container, onto which main support the walls 2, 3, and 4 are pivotally mounted. In the nesting position B illustrated in Figures 1 and 3, the walls 2 and 3 have been turned, about vertical hinges 1a, to an open V formation and the base wall 4 has been turned about a horizontal axis A to a nesting condition close to the rear wall 1. Thus, several roll containers may be pushed together so that they nest, with the walls 1 to 3 of one roll container against the walls 1 to 3 of adjacent roll containers; when in this condition, the roll containers take up less space. In the use condition C shown in Figures 1 and 2, the base wall 4 has been turned to a horizontal condition and the side walls 2 and 3 have been turned to be substantially parallel to each other and to the sides 4a and 4b of the base wall 4, whilst the forward part 4c of the base wall 4 has been latched to the side walls 2 and 3. The roll container includes rear wheels 5 mounted in the respective wheel boxes 11, and front castors 6 mounted on horizontal plates 6a fixed towards the fronts of the side walls 2 and 3.

Fixed to the rearward part 4d of the base wall 4 just inwardly of the respective wheel boxes 11 at respective opposite sides of the roll container are two vertical, bearing, side plates 7 perpendicular to the axis A. Formed through the respective plates 7 are respective elongate slots 9 which receive respective horizontal axle pins 10 having the common longitudinal axis A and fixed to the respective inner walls 11a of the wheel boxes 11, thereby providing respective bearings 8. Alternatively, the through slots 9 could be replaced by elongate blind slots in the outer surfaces of the respective plates 7, or the two axle pins could be replaced by a single axle pin extending from one wheel box 11 to the other. In further alternatives, the slots could be formed in the walls 11a and the axle pin or pins could be fixed to the plates 7.

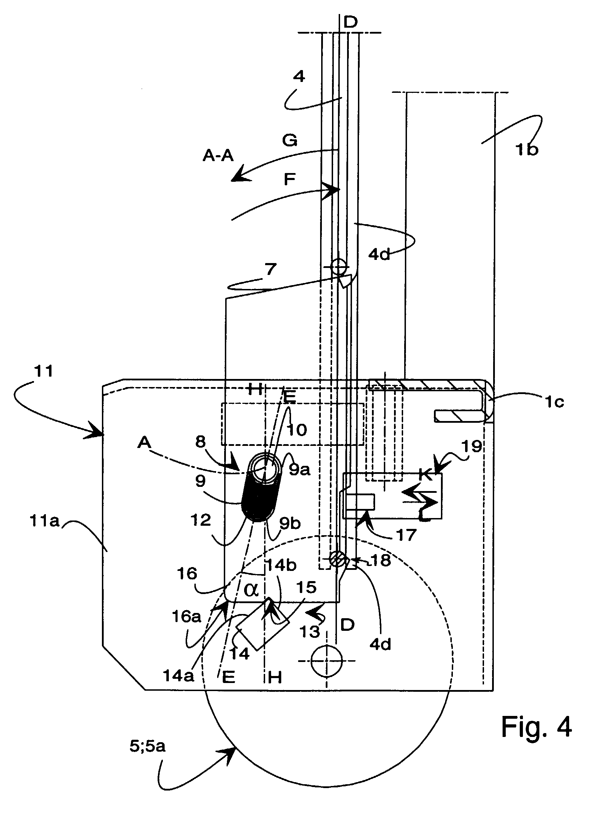

The longitudinal axis E-E of each slot 9 extends in the same general direction as the longitudinal axis D-D of the base wall 4. Acting between the base wall 4, on the one hand, and the support including the cross piece 1c, on the other hand, are springs 12 which are received in the respective slots 9 so as to act between the axle pins 10 and the lower ends 9b of the slots 9. The springs 12 thus act substantially in the longitudinal direction E-E of the slots 9. The springs 12 cause the upper ends 9a of the respective slots 9 to bear downwardly upon the respective axle pins 10. Advantageously, the springs 12 are respective blocks of elastomeric material, for example flexible rubber. Alternatively, each spring could take the form of a leaf spring or a spiral spring. Directly below the respective axle pins 10 are latching devices 13 and the effects of the respective springs 12 are to maintain the latching devices 13 in action and thus to hold the base wall 4 in its vertical position shown in Figure 4. The respective latching devices 13 preferably comprise respective latching, stub bars 14 fixed to the respective inner walls 11a, and respective notches 15 which are formed in the respective rearmost edges of the plates 7 and which engage over respective corners of the stub bars 14. If desired, the respective stub bars 14 may be replaced by a single bar interconnecting the respective inner walls 11a. Each stub bar 14 is of polygonal, in this case rectangular, cross-section and has its cross-section oblique to the horizontal, so that it provides respective ramp surfaces 14a and 14b of which the lamp surface 14a extends rearwardly and upwardly and the ramp surface 14b extends rearwardly and downwardly. The stub bars 14 have their uppermost corners, which engage in the notches 15, preferably arranged in substantially the same vertical plane H-H as the axis A.

The nesting position of the base wall 4 is slightly beyond the vertical, latched position shown in Figure 4, in the sense of the arrow F, such that the base wall 4 actually rests against the rear wall 1 and the notches 15 are slightly forward of the uppermost corners of the stub bars 14. If the base wall 4 is accidentally knocked forwards from its nesting position, the latching devices 13 prevent it from turning in the sense G beyond its vertical, latched position. The wall 4 is released from and returned to its vertical, latched position as follows. When the wall 4 is in its vertical, latched position, the springs 12 help to keep the notches 15 engaged over the uppermost corners of the stub bars 14. When the wall 4 is to be turned from its vertical, latched position to its use position, the user grips the forward part 4c, for example, of the wall 4 and then pulls it directly in the sense G, when the ramp surfaces 14a cause the plates 7 and thus the base wall 4 to rise against the action of the springs 12, so that the plates 7 ride over the stub bars 14 and the latching is released. Correspondingly, when the user turns the base wall 4 back in the direction of the arrow F, then, as the base wall 4 nears its vertical position, the plates 7 ride up the ramp surfaces 14b against the action of the springs 12, and then ride over the stub bars 14 until the notches 15 engage with the stub bars 14.

It is advantageous for each plate 7 to have a nose 16 which is ahead of the notch 15 in the sense F and the corner 16a of which is curved for riding more smoothly over the stub bar 14. The lever arm distance between the curved corner 16a and the axis A in the latched condition of the base wall 4 is greater than the lever arm distance between the stub bar 14 and the axle pin 10. The noses 16 have to override the stub bars 14 against the action of the springs 12, both when the release of the base wall 4 from its vertical, latched position is commenced by turning it in the sense G, and when the base wall is being returned to its vertical position by turning in the sense F. This increases the reliability of the latching of the wall 4 in its vertical position.

When such noses 16 are provided, it is advantageous to arrange that the longitudinal axes E-E of the slots 9 are at small angles α, which are between approximately 10° and approximately 20°, to the vertical plane H-H. Most advantageously, the longitudinal axes E-E of the slots 9 extend through the respective noses 16, as clearly shown in Figure 4. Thus, the axes E-E extend rearwardly and upwardly in the latched condition shown of the base wall 4. Then the greatest longitudinal forces on the respective springs 12 are required to enable the noses 16 to override the stub bars 14 in either of the senses F and G.

In the example illustrated, each extension 7 of the base wall 4 is a flat plate, but it could instead be constituted by an arm or another similar item.

Alternatively to the noses 16 being simply portions of plates 7, they could take the form of L-shaped arms which have to override the respective stub bars 14.

Advantageously, the side walls 2 and 3 have plate-form limiting arms 17 fitted to their rear lower corner zones. Once the base wall 4 has been turned up into its nesting condition, in which it rests against the rear wall 1, and which is slightly beyond the latching condition in the sense F in Figure 4, the side walls 2 and 3 are turned outwards into their nesting conditions, so swinging the limiting arms 17 in the sense K in Figure 4 to close to the rearward part 4d of the base wall 4, suitable apertures 19 being provided in the respective inner walls 11a of the wheel boxes 11, to receive the respective arms 17. The structure and function of the limiting arms 17 has been described in more detail in WO-A-95/30566. Each plate 7 is provided with a lug 18 which comes to bear against the adjacent limiting arm 17 when the base wall 4 has been released from its vertical position and thus retains the base wall 4 in an oblique position and so prevents the wall 4 from falling freely to and beyond its horizontal position. When the side walls 2 and 3 are turned inwards towards their use conditions, the limiting arms 17 are swung (in the sense L in Figure 4) away from the respective lugs 18, so that the base wall 4 is released from its oblique intermediate position and can then turn relatively freely into its horizontal position. The horizontal plates 6a are formed with respective through holes designed to receive respective hooks or pins of the wall 4 at the undersides of the respective front corners thereof, when the wall 4 is turned down into its use condition with the side walls 2 and 3 already in their use conditions. Owing to the action of the springs 12, which continuously urge the base wall 4 into a definite linear position relative to the axle pins 10, the hooks or pins enter the holes in the plates 6a relatively reliably when the base wall 4 is lowered into its use condition.

Instead of having respective bearing devices 8 and respective latching devices 13 at the respective opposite sides of the base wall 4, it is possible to arrange for one of each to be provided at only one side of the base wall 4. However, it is more advantageous to provide them at both sides of the base wall 4, as described above.

## Claims

1. A goods container comprising supporting means (1c,11), a substantially horizontal, goods-bearing wall (4) having a forward part (4c) and a rearward part (4d), substantially horizontal, transverse, pivot means (10) pivotally mounting said wall (4) on said supporting means (1c,11) for turning about a substantially horizontal axis, in an edge region of said supporting wall (4), between a substantially horizontal position and a substantially vertical position, and latching means (13) arranged to latch said wall (4) in said substantially vertical position, the arrangement being such that latching of said wall (4) in said substantially vertical position requires movement of a member (7) of said rearward part (4d) from an unlatched, raised condition to a latched, lowered condition and that unlatching of said wall (4) requires movement of said member (7) from said latched, lowered condition to said unlatched, raised condition, characterized in that spring means (12) acts between said wall (4) and said supporting means (1c,11) and, when said wall (4) is in said substantially vertical condition, urges said wall (4) downwardly.

2. A goods container according to claim 1, and further comprising an elongate slot (9) fixed relative to one of said wall (4) and said supporting means (1c,11) and having its longitudinal axis (E-E) inclined to the horizontal, said pivot means (10) comprising a pivot axle (10) fixed relative to the other of said wall (4) and said supporting means (1c,11), extending into said slot (9) and displaceable relative to said slot (9) longitudinally of said slot (9), and said spring means (12) being interposed between said pivot axle (10) and the lower end (9b) of said slot (9).

3. A goods container according to claim 2, wherein said longitudinal axis (E-E) of said slot (9) extends upwardly and rearwardly.

4. A goods container according to claim 2 or 3, wherein said slot (9) is fixed relative to said wall (4).

5. A goods container according to any preceding claim, wherein said spring means (12) comprises a block (12) of elastomeric material.

6. A goods container according to any preceding claim, wherein said latching means (13) includes ramp means (14a) effective between said wall (4) and said supporting means (1c,11) and inclined rearwardly such that, with said wall (4) in said substantially vertical position, a forward turning moment upon said forward part (4c) causes said rearward part (4d) to be cammed upwardly by said ramp means (14a) against the action of said spring means (12) to bring said member (7) to said raised, unlatched condition.

7. A goods container according to claim 6, wherein said pivot means (10) is located above said ramp means (14a) and said ramp means (14a) is inclined rearwardly and upwardly.

8. A goods container according to claim 7, and further comprising second ramp means (14b) effective between said wall (4) and said supporting means (1c,11) and inclined rearwardly and downwardly such that, with said wall (4) between said substantially horizontal position and said substantially vertical position but near said substantially vertical position, a rearward turning moment upon said forward part (4c) causes said rearward part (4d) to be cammed upwardly by said second ramp means (14b) against the action of said spring means (12) prior to said rearward part lowering to bring said member (7) to said lowered, latched condition.

9. A goods container according to claim 6, 7, or 8, and further comprising a nose (16) on said member (7) and arranged to ride up the ramp means (14a,14b).

10. A goods container according to claim 8 or 9, wherein the ramp means (14a,14b) is provided by a transverse bar (14) of polygonal cross-section.

11. A goods container according to any preceding claim, wherein said latching means (13) includes a notch (15) formed in said member (7).

12. A goods container comprising supporting means (1c,11), a substantially horizontal, goods-bearing wall (4) having a forward part (4c) and a rearward part (4d), substantially horizontal, transverse, pivot means (10) pivotally mounting said wall (4) on said supporting means (1c,11) for turning about a substantially horizontal axis, in an edge region of said supporting wall (4), between a substantially horizontal position and a substantially vertical position, and latching means (13) arranged to latch said wall (4) in said substantially vertical position, the arrangement being such that latching of said wall (4) in said substantially vertical position requires movement of a member (7) of said rearward part (4d) from an unlatched, raised condition to a latched, lowered condition and that unlatching of said wall (4) requires movement of said member (7) from said latched, lowered condition to said unlatched, raised condition, characterized in that said latching means (13) includes ramp means (14a) effective between said wall (4) and said supporting means (1c,11) and inclined rearwardly such that, with said member (7) in said latched, lowered condition, a forward turning moment upon said forward part (4c) causes said rearward part (4d) to be cammed upwardly by said ramp means (14a) to bring said member (8) to said raised, unlatched condition.

13. A goods container according to claim 12, wherein said pivot means (10) is located above said ramp means (14a) and said ramp means (14a) is inclined rearwardly and upwardly.

14. A goods container according to claim 13, and further comprising second ramp means (14b) effective between said wall (4) and said supporting means (1c,11) and inclined rearwardly and downwardly such that, with said wall (4) between said substantially horizontal position and said substantially vertical position but near said substantially vertical position, a rearward turning moment upon said forward part (4c) causes said rearward part (4d) to be cammed upwardly by said second ramp means (14b) against the action of said spring means (12) prior to said rearward part lowering to bring said member (7) to said lowered, latched condition.

15. A goods container according to claim 12, 13, or 14, and further comprising a nose (16) on said member (7) and arranged to ride up the ramp means (14a,14b).

16. A goods container according to claim 14 or 15, wherein the ramp means (14a,14b) is provided by a transverse bar (14) of polygonal cross-section.

17. A goods container according to any one of claims 12 to 16, wherein said latching means (13) includes a notch (15) formed in said member (7).

18. A goods container according to any preceding claim, and further comprising first and second substantially vertical, lateral, goods-confining walls (2,3) at respective opposite sides of said goods-bearing wall (4), first and second substantially vertical pivot means (1a) pivotally mounting the respective confining walls (2,3) for turning about respective substantially vertical axes, in respective edge regions of said confining walls (2,3), between respective goods-confining positions in which said confining walls (2,3) are substantially parallel with each other and respective outwardly-swung positions in which said confining walls (2,3) have been swung outwardly away from each other.

19. A goods container according to claim 18, wherein the first goods-confining wall (2) has a control element (17) attached thereto and arranged to prevent movement of said goods-bearing wall (4) down into its substantially horizontal position when said first goods-confining wall (2) is in its outwardly swung position.
